# EUROPEAN PATENT APPLICATION

(11) **EP 4 477 482 A1**
(43) Date of publication of application: **18.12.2024**
(21) Application number: 23178640.1
(22) Date of filing: 12.06.2023
(51) Int. Cl.: B60T 7/06, B60T 11/18, G05G 1/40, G05G 1/44

(54) **ADJUSTABLE PEDAL SYSTEM**

(71) Applicant: Bugatti Rimac LLC, 10431 Sveta Nedjelja (HR)
(72) Inventor: STEFANI, Giovanni, 42014 Cadiroggio (Reggio Emilia) (IT); BRTAN, Josip, 10437 Rakitje (HR); PISKORIC, Ivan, 10000 Zagreb (HR); TARE, Vedran, 10000 Zagreb (HR); MORGAN, Liam, 10110 Jarun, Zagreb (HR); STRMEN-DVORSKI, Mario, 10292 Senkove (HR)
(74) Representative: Grassi, Stefano

(57) **Abstract**

An adjustable pedal (4) system comprises a guide (2) fixable to the floor of a vehicle, a base member (3) presenting a vertical wall (3a) and configured to slide on the guide (2), a pedal (4) hinged on the base member (3) and a transfer device (5) comprising itself a reference plate (7) couplable to an actuator (6), a transfer rod (8) and a couple of rocker arms (9, 10). A first rocker arm (9) presents a first vertex (9a) coupled to the pedal (4), a second vertex (9b) coupled to the transfer rod (8) and a third vertex (9c) coupled to a rolling cylinder. A second rocker arm (10) is hinged on the reference plate (7) and presents a fourth vertex (10a) couplable to an activation element of the actuator (6) and a fifth vertex (10b) coupled to the transfer rod (8).

## Description

### Technical field

The present invention pertains to the technical field of adjusting system for the customized positioning of mechanical devices.

In particular, the present invention relates to an adjustable pedal system specifically designed to allow the customized positioning of pedals (in particular the brake pedal) for use in a vehicle, for example a motor vehicle.

### Background art

It is known to equip vehicles with adjustable seats that can be moved at least towards and away from the steering wheel to allow the driver to customize the distance according to its own need.

However, such feature requires the allocation inside the vehicle of a certain travel volume to allow a correct amount of movement for the seat and that is not always possible, especially when the vehicle is a high-performance two-seater.

Moreover, removing the seat travel (fixing the seat) cuts required volume and thus provides various advantages among which a shortened wheelbase and a reduced positioning area for the driver's head, thus allowing for a specially curated interior experience, glare reduction and a more ergonomic positioning of button, switches and dials.

To compensate the fixed position of the seat and allow the driver to set a comfortable seating experience inside the vehicle, it is known to provide for an adjustable pedalbox, wherein it is possible to modify the distance of the pedals from the seat.

However, current solution for the adjustable pedalbox still have problems that limit their usability: the known pedal's connections that allows for its forward/rearward movement causes the so called "Noise, Vibration and Harshness" issues (NVH) and consequently, road noise, braking noise and more generally compartment noises become more noticeable when implementing this kind of systems.

In view of the above it is evident how in the field there is a great need for novel solution providing new configuration aimed at allowing the flexibility of customizing the seating experience in every situation while at the same time providing an efficient, stable, reliant system that does not introduce/worsen NVH issues.

### Disclosure of the invention

In this context, the technical purpose which forms the basis of this invention is to provide an adjustable pedal system that overcomes the above-mentioned drawbacks of the prior art.

In particular, the aim of the invention is to provide an adjustable pedal system that allows for an easy and efficient customization of the driving experience while guaranteeing at the same time the avoidance of any NVH issue.

The technical purpose indicated and the aims specified are substantially achieved by an adjustable pedal system comprising the technical features described in one or more of the appended claims.

The invention describes an adjustable pedal system, in particular an adjustable pedal system for a vehicle.

Said system comprises essentially a guide, a base member, at least one pedal and a transfer device.

The guide is configured to be fixed on the floor of the vehicle.

The base member comprises a vertical wall and is coupled to the guide so as to be movable, in particular slidable, along an adjusting direction.

The adjusting direction is defined by the structure of the guide which constrain the movement of the base member along said adjusting direction.

Preferably, the adjusting direction is a substantially linear direction.

The at least one pedal is hinged on the base member.

Preferably, the system may comprise a plurality of pedals, each pedal being independently hinged on the base member.

Even more preferably, the system comprises a plurality of base members independently coupled to the guide, each pedal being hinged on a respective base member.

The transfer device couples the pedal to a respective actuator.

Preferably, the pedal is a brake pedal, and the actuator is a brake booster. From a structural point of view, the transfer device essentially comprises a reference plate, a transfer rod, a first rocker and a second rocker.

The reference plate is couplable to the actuator in a fixed position.

The first rocker arm presents a first vertex, a second vertex and a third vertex.

The first vertex is coupled to the pedal.

The second vertex is coupled to the transfer rod.

Specifically, an end of the transfer rod is hinged to the second vertex.

The third vertex is coupled to a rolling cylinder, which also forms part of the first rocker arm.

The rolling cylinder is configured to roll along the vertical wall during a movement of the base member.

Furthermore, the rolling cylinder is configured to act as a fulcrum of rotation for the first rocker arm when the pedal is pressed.

The second rocker arm is hinged on the reference plate and presents a fourth vertex and a fifth vertex.

The fourth vertex is couplable to an activation element of the actuator. The fifth vertex is coupled to the transfer rod.

Specifically, an end of the transfer rod is hinged to the fifth vertex. Preferably, the second rocker arm further comprises a sixth vertex defining (or concurring to define) the hinging point of the rocker arm on the reference plate.

Advantageously, the adjustable pedal system described herein provides for a base member that solidly couples the movement of the pedal to a reference point defined by the floor itself of the vehicle, thus allowing to adjust its position in a particularly stable way without the risk of having NVH issues.

### Brief description of drawings

Further features and advantages of this invention are more apparent in the detailed description below, with reference to a preferred, non-restricting, embodiment of an adjustable pedal system as illustrated in the accompanying drawings, in which:
- figures 1 and 2 show a possible embodiment of the present invention in a free and pressed condition for the pedal.
- figures 3 and 4 show a different configuration of the adjustable pedal system in the corresponding condition of figure 1 and 2, respectively;

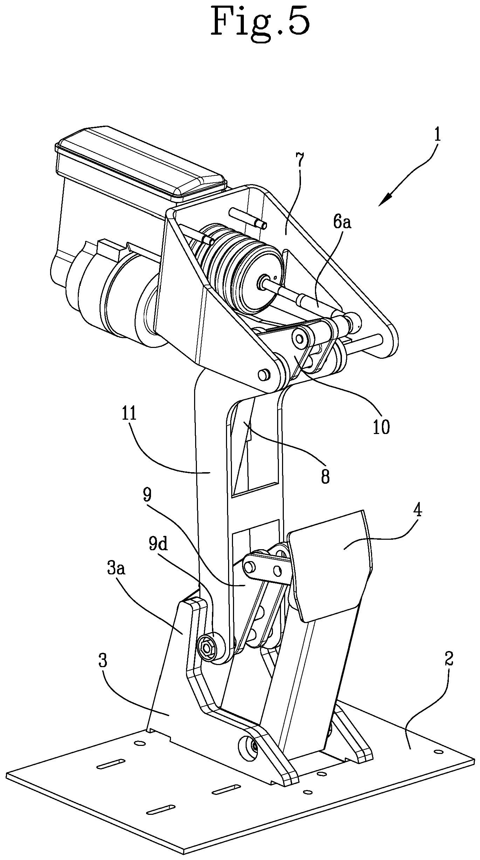

- figure 5 show the adjustable pedal system from a different point of view.

### Detailed description of preferred embodiments of the invention

In the attached figures with the reference numeral 1 it is indicated an adjustable pedal system according to the present invention to which reference will be made in the following simply as system 1 for conciseness.

In particular, the system 1 is advantageously implementable in a vehicle to allow the easy and efficient customization of the position of one or more pedal, specifically allowing to change the relative position between said pedal and a driver seat.

In other words, the system 1 described in the following allows the driver to set a comfortable seating experience inside the vehicle without giving rise to any noise, vibration and/or harshness that could worsen the overall driving experience.

From a structural point of view, said result is obtained by a system 1 that essentially comprises: a guide 2, a base member 3, at least one pedal 4 and a transfer device 5 that connects said pedal 4 to a corresponding actuator 6.

The guide 2 is configured to be fixed on the floor of the vehicle, allowing to solidly couple the system 1 to the structure of the vehicle and thus providing for a stable reference point that prevents the overall vibration of the system 1 during use of the vehicle itself.

Said guide 2 is structurally conformed to allow the movement along at least one specific direction, preferably just one direction, defined henceforth as the adjusting direction, of the other components of the system 1 modifying their position with regards to the driver seat. Specifically, according to a possible embodiment of the present invention, the guide 2 is (or comprises) a linear guide defining an adjusting direction which is a substantially linear direction, preferably a substantially linear direction developing along a length of the vehicle.

In other words, the guide 2 may be a linear guide that allows the user to move the other components of the system (specifically the pedal 4) towards or away from the driver seat to respectively decrease or increase the distance between these two elements.

Preferably, said linear guide 2 presents a length comprised between 20 cm and 22 cm along the adjusting direction, meaning that it is possible to modify the distance of the system 1 from the driver seat for a length of at least 20 cm.

Advantageously said guide 2 may present other structural features/shapes so as to also allow other kind of movement aimed at changing the relative position between the pedal 4 and the driver seat.

By way of an example, the guide 2 may present a platelike element slidable along the adjusting direction and presenting a slit developing in a direction transversal to the adjusting direction (for example perpendicular to said adjusting direction) and the other elements of the system 1 are coupled to the guide 2 through the platelike element so as to allow their overall movement also along a direction transverse to the adjusting direction.

in other words, the above platelike element allows to move the pedal 4 also left and right with respect to the driver seat.

Analogously, the guide 2 may comprise a raisable element that allows to modify the height of the other elements of the system 1 coupled to it.

More in detail, the movement and the customization of the system 1 is allowed by the relationship between the guide 2 with the base member 3, with the latter being coupled/linked to the first in a such a way as to be at least movable (e.g. slidable) along the adjusting direction.

In other words, the guide 2 is stably fixed on the floor of the vehicle and the base member 3 is slidably coupled to it so as to be able to move along the adjusting direction thus allowing the user to customize its position in particular with respect to the driver seat.

The base member 3 further comprises a vertical wall, the function of which will be discussed in detail in the following paragraphs.

Furthermore, the system 1 may comprise an activation device coupled to the base member 3 and configured to assume a locked configuration and an unlocked configuration.

In the locked configuration, the base member 3 is locked in position and cannot move/be moved, while in the unlocked configuration, the base member 3 is free to move, specifically on the guide 2, along at least the adjusting direction.

In other words, the activation device allows the user to stably fix in position the base member 3 on the guide 2 once an optimal configuration is found and to help maintaining said position even during use of the vehicle.

Preferably, the activation device is a motorized activation device further configured to move the base member 3 along the adjusting configuration when in the unlocked configuration.

It is to say that the activation device not only determines if the base member 3 can move, but also can be controlled by the user to determine the amount and direction of movement of the base member 3 on the guide 2.

For example, the motorized activation device may be coupled to a control unit of the vehicle to allow the user to finely tune the position of the system 1 by acting directly on an interface provided on the vehicle.

The pedal 4 is in turn hinged on said base member 3 and as such moving the base member 3 means also moving the pedal 4 in a corresponding way.

In other words, when the base member 3 is made to slide on the guide 2 along the adjusting direction, the pedal 4 is brought nearer or further away from the driver seat, and thanks to the guide 2 being fixed on the floor of the vehicle the system 1, the system 1 remains stable and no NVH issues arise.

In order to allow the pedal 4 to be moved according to the need of the user and at the same time guaranteeing its correct functioning (i.e., its correct connection with the corresponding actuator 6) a specific transfer device 5 is provided.

As indicated above, said transfer device 5 is configured to couple the pedal 4 with the corresponding actuator 6, in a manner that allows it to work properly irrespective of the specific position of the pedal 4 with respect to the driver seat.

Structurally, the transfer device 5 comprises a reference plate 7, a transfer rod 8 and a couple of rocker arms, specifically a first rocker arm 9 and a second rocker arm 10.

The reference plate 7 is couplable to the actuator 6 in a fixed position.

In other words, the reference plate 7 defines a reference point for the system 1 on the actuator 6, providing for a fixed and stable element to which the other components of the transfer device 5 are linked.

The transfer rod 8 is the element that physically links the actuator 6 (through the reference plate 7) to the pedal 4 (through the base member 3) and operates thanks to the first and the second rocker arm 9, 10.

More in detail, the first rocker arm 8 presents a first vertex 9a, a second vertex 9b and a third vertex 9c, thus having preferably a substantially triangular shape as can be seen in the attached figures.

The first vertex 9a is coupled to the pedal 4 directly or through a mechanical linking element, such as a bracket B as illustrated in the figures, so that by pressing the pedal 4 a corresponding pushing force is transmitted to the first vertex 9a.

The second vertex 9b is instead coupled to the transfer rod 8, specifically with an extremity of said transfer rod 8 being hinged on the second vertex 9b.

The third vertex 9c is instead coupled to a rolling cylinder 9d (which is in itself part of the transfer device 5), which is configured to roll along the aforementioned vertical wall 3a of the base member 3.

Specifically, the rolling cylinder 9d is configured to roll along the vertical wall 3a during a movement of the base member 3, specifically a movement on the guide 2, and to act as a fulcrum of rotation for the first rocker arm 9 when the pedal is pressed.

In other words, in use, the rolling cylinder 9d provides a reference point between the transfer rod 8, the base member 3 and the pedal 4.

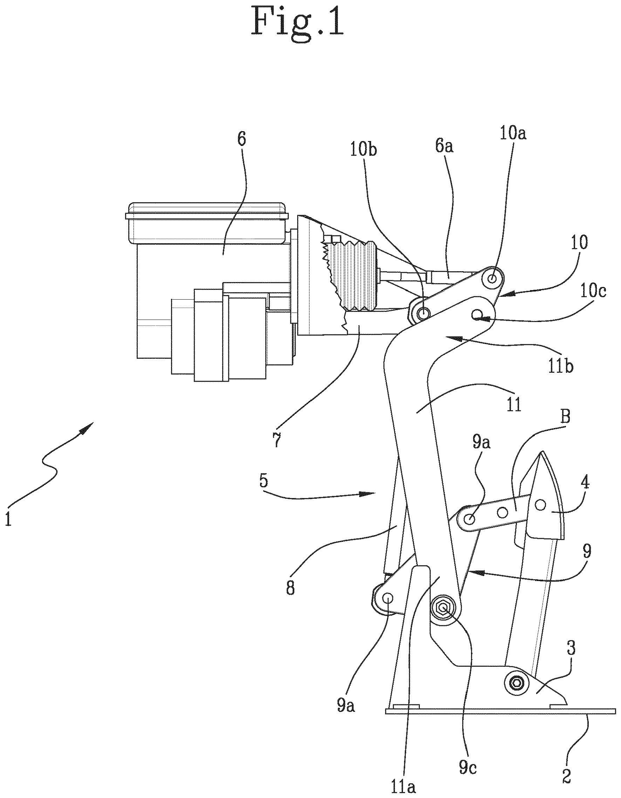

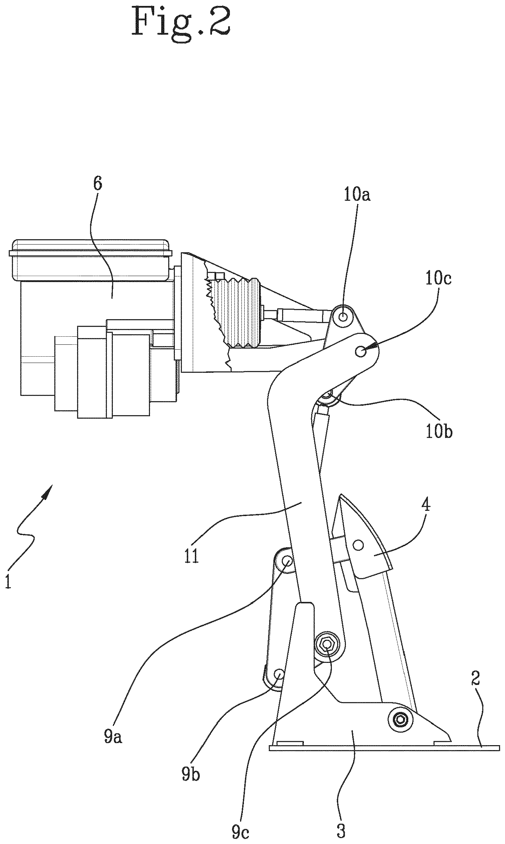

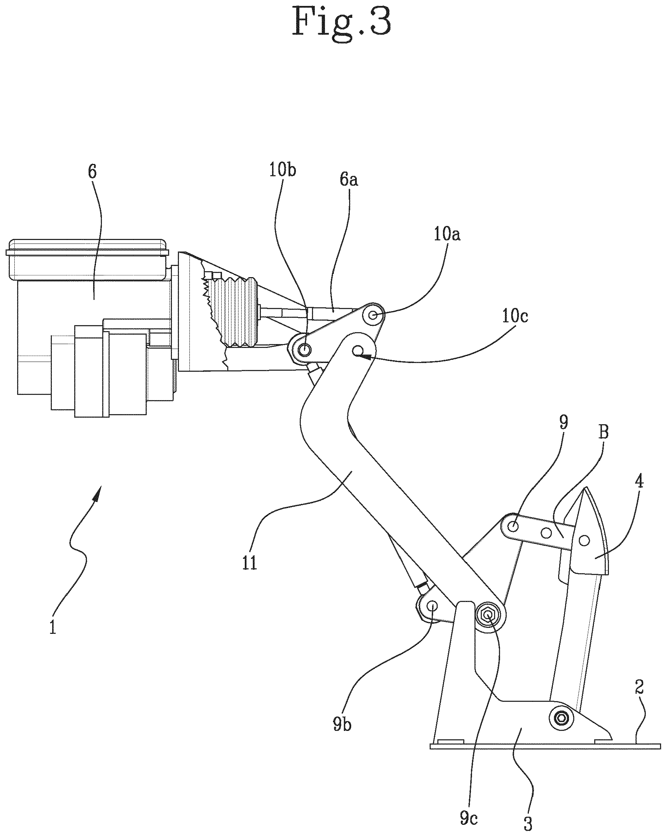

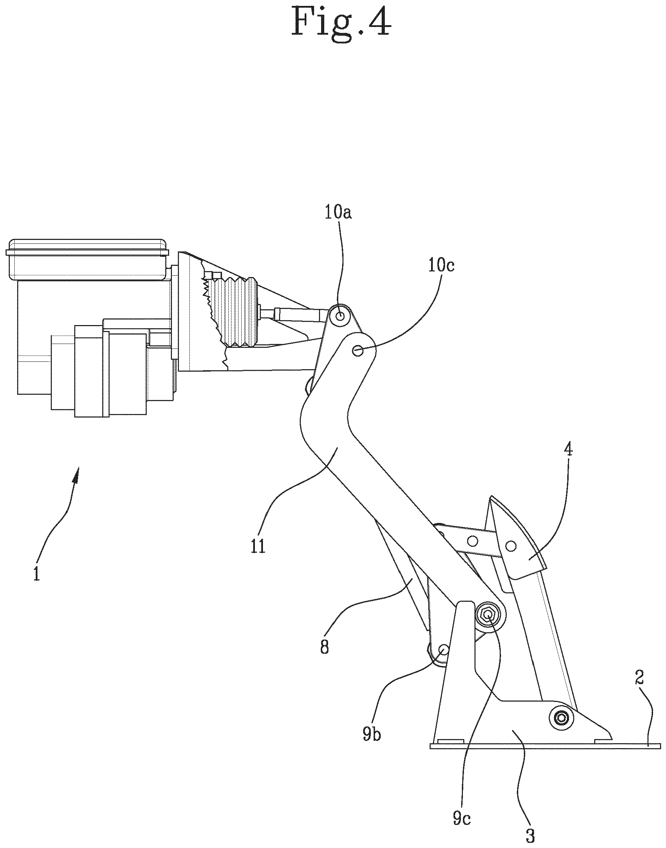

It is to say that when the pedal 4 is pressed, the corresponding pressing force is transmitted to the first vertex 9a causing the first rocker arm 9 to rotate around the third vertex 9c which is up against the vertical wall 3a and cannot thus translate along the direction of the push (see the movement of the pedal depicted in figures 1 and 2 and also the corresponding movement in figures 3 and 4).

Instead, when the base member 3 is made to move along the adjusting direction on the guide 2, the rolling cylinder 9d rolls over the vertical wall 3a, going up or down to compensate the change of relative position between the pedal 4 and the actuator 6 (see the different positions of the pedal depicted in figures 1 and 3).

Preferably, the system 1 further comprises biasing means, preferably elastic biasing means, configured to exert a biasing force on the rolling cylinder 9a so as to push said rolling cylinder in contact against the vertical wall 3a.

In this way it is guaranteed an optimal contact between the rolling cylinder 9d and the vertical wall 3a in every moment and irrespective of the specific movement of the pedal 4 or the movement of the base member 3 to which those elements are subject.

Alternatively, or additionally, the vertical wall 3a may present a slit and the rolling cylinder 9d may be slidably coupled to said slit so that its movement is mechanically limited to the specific path defined by the slit itself and any potential undesired disengagement between the rolling cylinder 9d and the vertical wall 3a is prevented.

More in detail, the vertical wall 3a comprises a roller canal (specifically defined by the slit) developing along a substantially vertical direction and said rolling cylinder 9d is rotatably lodged in the roller canal.

On the other end of the transfer rod 8, the second rocker arm 10 links it to the reference plate 7.

Specifically, the second rocker arm 10 is hinged on the reference plate 7 and presents a fourth vertex 10a which is couplable to an activation element 6a of the actuator and a fifth vertex 10b coupled to the transfer rod 8, specifically with an end of the transfer rod 8 (opposed to the one hinged to the second vertex 9b) being hinged on said fifth vertex 10b.

It is underlined that in the present description the ordinal terms first, second, third, fourth, fifth and so on used to indicate specific vertexes of the rocker arms 9, 10 are simply implemented to identify in a clear way each vertex with an unambiguous name, without implying any specific order to them or relation thereof.

Specifically, the use of the terms fourth and fifth vertex 10a, 10b for the vertexes pertaining to the second rocker arm 10 does not automatically imply and/or require the presence in the same second rocker arm 10 of any other vertex with a lower or higher ordinal number, the same also stand true in a corresponding way with regard to the name given to the vertexes of the first rocker arm 9.

Also, the activation element 6a of the actuator may be any component of the actuator which is configured and/or able to receive a mechanical input from the pedal 4 and to use said input to activate the actuator 6.

For example, said activation element 6a may be a piston that when pressed causes the activation of the actuator 6.

In a use configuration, when the pedal 4 is pressed, as indicated above, the first rocker arm 9 rotates around the third vertex 9c causing the movement of the second vertex 9b to which a first end of the transfer rod 8 is coupled.

Consequently, the transfer rod 8 is displaced and also its other end, which is coupled to the fifth vertex 10b, moves.

The second rocker arm 10 being hinged itself to the reference plate 7 starts to rotate around its hinging point on the reference plate under the force exerted by the movement of the transfer rod 8 via the fifth vertex 10b, causing the fourth vertex 10a to start moving and consequently pressing on the activation element 6a.

In this way, the force exerted on the pedal 4 by pressing it is transferred to the actuator 6.

Further to the above, to improve its structural stability, the system 1 may comprise an elongated connecting framework 11.

Said framework 11 presents a first extremity 11a connected/coupled to the third vertex 9c and a second extremity 11b connected to the second rocker arm 10.

Specifically, in this context, the second rocker arm 10 may present a sixth vertex 10c to which the second extremity 11b is coupled/linked. Preferably, the sixth vertex 10c corresponds to a hinging point of the second rocker arm 10 to the reference plate 7.

In this situation, the second rocker arm 10 may present a substantially triangular shape, as illustrated in the attached figures.

The framework 11 provides for a further structural element that helps maintaining the system 1 stable and reduces the risk of breaking of its component insofar it allows to absorb part of the mechanical stress to which they are subject.

According to a possible embodiment of the present invention, the connecting framework 11 comprises a couple of plates facing each other and externally coupled to respective opposite faces of the first and second rocker arm 9, 10.

In other words, the framework 11 comprises or consists of two plate like element that are each independently coupled to the first and the second rocker arm 9, 10 (in the way and according to the specific disclosed above) so that the rocker arms 9, 10 are enclosed and thus protected between the plates.

Advantageously, the framework 11, specifically the two plate like element, presents an elongated shape that follows the profile of the transfer rod 8 so that also the transfer rod 8 itself is at least partially enclosed/protected by the framework 11.

According to a possible embodiment of the present invention, the at least one pedal 4 that is part of the system 1 is specifically a brake pedal and the transfer device 5 is in this context configured to couple said brake pedal to a brake booster.

In other words, the system 1 of the present invention may be implemented to allow customization of the position of at least the brake pedal of the vehicle by providing an adjustable pedal system 1 with a structure that prevents NVH issues thanks to the specific coupling mediated by the guide 2 and the base member 3 between the pedal 4 and the floor of the vehicle itself.

Furthermore, the present invention allows for a ratio between a stroke length of the pedal 4 (for example the brake pedal) and a corresponding stroke length of the actuator 6 (for example the brake booster), namely of its activation element 6a, to be maintained between a value of 1.5 and a value of 3.7.

Such a result is obtained by specifically selecting and designing the dimensions of the rocker arms 9, 10.

By changing the distances between the various vertexes of the rocker arms 9, 10, i.e., by changing the length of the sides of the rocker arms 9, 10, it is possible to select the specific ratio between the stroke lengths of the actuator 6 and the pedal 4, thus permitting to select how the force exerted on the pedal 4 is transmitted to the actuator 6.

In other words, it is possible to select the ratio between the displacement of the pedal 4 and the consequent/corresponding displacement of the activation element 6a so as to tune the response of the actuator 6 to the user pressing the pedal 4.

Furthermore, depending on the dimensions of the rocker arms 9, 10, the above-mentioned ratio may also vary between a minimum value and a maximum value based on the position of the base member along the guide.

Specifically, when the rocker arms 9, 10 presents different dimension, in a use configuration a minimum value for the ratio is obtained when the system 1 is in a position of maximum distance of the pedal 4 (the brake pedal) from a driver seat of the vehicle and, on the contrary, a maximum value corresponds to a minimum distance of it from the driver seat.

In this way, the user is able not only to select the specific position and distance of the pedal 4 from the driver seat, but can also select and tune the response of the actuator 6 to a specific amount of pressure that is applied on the pedal 4.

If instead the rocker arms 9, 10 both present the same dimension and structure (i.e. they have a profile presenting the same number of sides with the same length for corresponding sides) the ratio is set and is a function of the selected dimension, thus modifying the distance of the pedal 4 from the driver seat would not change said ratio.

For sake of clarity and conciseness the above description has been focused on an embodiment including just one pedal 4, however, it is highlighted that the system 1 of the present invention may be implemented to adjust the position of more than just one pedal 4.

Specifically, the system 1 may comprise a plurality of pedals 4 independently hinged on the base member 3 and a corresponding plurality of transfer devices 5.

In this context, each transfer device 5, is independently and autonomously coupled to a specific pedal 4 to connect it and couple it to a corresponding actuator 6.

In other words, the system 1 still comprises a single guide 2 that links the overall structure of the system 1 to the floor of the vehicle when in use on which are installed (via the base member 3) a plurality of pedal 4 that are coupled to respective actuators 6 through specific transfer devices 5.

The base member 3 may be a single base member shared by all the pedals 4, so that when the base member 3 is moved all the pedals 4 are brought nearer or further away from the driver seat at the same time and in the same way (and generally they altogether change their position with respect to said driver seat in the same manner).

According to an alternative embodiment, the system 1 comprises a plurality of base members 3 each coupled to a respective pedal 4, so that the user may modify the position of each single pedal 4 independently without affecting the specific position of the other pedals.

In this context, what was described above with reference to the single base member 3 (e.g., the presence and functioning of the activation device) may also apply correspondingly and independently for each base member 3 of the system 1.

Generally, the system 1 may comprise a plurality of pedal 4 among which at least one of the following is present: a brake pedal, an acceleration pedal and/or a clutch pedal.

Advantageously, the present invention solves the problem lamented in the prior art, insofar it provides a system 1 that allows to finely tune the position of at least one pedal 4 to easily customize the driving experience of the user, while at the same time guaranteeing the avoidance of any potential NVH issue thanks to the way that the system 1 is coupled to the floor of the vehicle.

It also forms parts of the present invention an actuating device, specifically an actuating device for a vehicle, which implements and comprises and adjustable pedal system 1 and an actuator 6.

Specifically, the actuator 6 is coupled to the pedal 4 of the system 1 through the transfer device 8.

According to a preferred embodiment the pedal 4 is specifically a brake pedal and the actuator 6 is a brake booster, however in general the pedal 4 may also be an accelerator or a clutch pedal and the actuator may be a corresponding device configured to be controlled and activated by the user exerting a force on the corresponding pedal.

The device may also comprise a system 1 that, as discussed above, is equipped with more than one pedal and in this context the device also comprises more than one actuator 6, wherein each actuator 6 is coupled to a corresponding pedal 4 through an independent and autonomous transfer rod 8.

## Claims

1. An adjustable pedal system for a vehicle comprising:
- a guide (2) configured to be fixed on the floor of the vehicle;
- a base member (3) comprising a vertical wall (3a) and coupled to the guide (2) so as to be movable along an adjusting direction;
- at least one pedal (4) hinged on said base member (3);
- a transfer device (5) configured to couple said pedal (4) to an actuator (6);
said transfer device (5) comprising:
- a reference plate (7) couplable to the actuator (6) in a fixed position;
- a transfer rod (8);
- a first rocker arm (9) presenting a first vertex (9a) coupled to the pedal (4), a second vertex (9b) coupled to the transfer rod (8) and a third vertex (9c); said first rocker arm (9) comprising a rolling cylinder (9d) coupled to the third vertex (9c) and configured to roll along said vertical wall (3a) during a movement of the base member (3) and to act as a fulcrum of rotation for the first rocker arm (9) when the pedal (4) is pressed; and
- a second rocker arm (10) hinged on said reference plate (7) and presenting a fourth vertex (10a) couplable to an activation element of said actuator (6) and a fifth vertex (10b) coupled to the transfer rod (8).

2. Adjustable pedal system according to claim 1, wherein the guide (2) is a linear guide (2), and the adjusting direction is a substantially linear direction, preferably a substantially linear direction developing along a length of the vehicle.

3. Adjustable pedal system according to any of the preceding claims, comprising an activation device coupled to the base member (3) and configured to assume a locked configuration in which the base member (3) is locked in position and an unlocked configuration in which the base member (3) is free to move along the adjusting direction.

4. Adjustable pedal system according to claim 3, wherein the activation device is a motorized activation device further configured to move the base member (3) along the adjusting configuration when in the unlocked configuration.

5. Adjustable pedal system according to any of the preceding claims, comprising an elongated connecting framework (11) presenting a first extremity (11a) connected to the third vertex (9c) and the second rocker arm (10) presents a sixth vertex (10c) coupled to a second extremity (11b) of the connecting framework; preferably, said sixth vertex (10c) corresponds to a hinging point of the second rocker arm (10) to the reference plate (7).

6. Adjustable pedal system according to claim 5, wherein the connecting framework (11) comprises a couple of plates facing each other and externally coupled to respective opposite faces of the first and second rocker arm (10) so that said first and second rocker arm (10) are enclosed between the plates.

7. Adjustable pedal system according to any of the preceding claims, wherein the vertical wall (3a) comprises a roller canal developing along a substantially vertical direction and said rolling cylinder (9d) is rotatably lodged in said roller canal.

8. Adjustable pedal system according to any of the preceding claims, comprising biasing means, preferably elastic biasing means, configured to exert a biasing force on the rolling cylinder (9d) so as to push said rolling cylinder (9d) in contact against the vertical wall (3a).

9. Adjustable pedal system according to any of the preceding claims, wherein the at least one pedal (4) comprises a brake pedal (4) and the transfer device (5) is configured to couple said brake pedal (4) to a brake booster.

10. Adjustable pedal system according to claim 9, wherein a ratio between a stroke length of the brake pedal (4) and a corresponding stroke length of the brake booster is comprised between 1.5 and 3.7.

11. Adjustable pedal system according to claim 10, wherein said ratio varies between a minimum value and a maximum value based of the position of the base member (3) along the guide (2), preferably in a use configuration said minimum value corresponding to a position of maximum distance of the brake pedal (4) from a driver seat of the vehicle and said maximum value corresponding to a minimum distance of the brake pedal (4) from the driver seat.

12. Adjustable pedal system according to any of the preceding claims, comprising a plurality of pedals (4) independently hinged on the base member (3) and a corresponding plurality of transfer devices (5), each transfer device (5) being configured to couple a respective pedal (4) to a respective actuator (6).

13. Adjustable pedal system according to claim 12, wherein said plurality of pedals (4) comprises at least one between: a brake pedal, an acceleration pedal and/or a clutch pedal.

14. Actuating device comprising:
- an adjustable pedal system (1) according to any of the preceding claims.
- an actuator (6) coupled to the pedal (4) through the transfer device (5) of said adjustable pedal system (1).

15. Actuating device according to claim 14, wherein the adjustable pedal system (1) comprises a brake pedal (4) and the actuator (6) is a brake booster coupled to said brake pedal (4).
